# EUROPÄISCHE PATENTSCHRIFT

(11) **EP 1 290 092 B1**
(45) Veröffentlichungstag und Bekanntmachung des Hinweises auf die Patenterteilung: **04.01.2006**
(21) Anmeldenummer: 01945229.1
(22) Anmeldetag: 01.06.2001
(51) Int. Cl.: C09D 5/02, C09D 7/06, B05D 7/00

(54) **PULVERKLARLACKDISPERSIONEN (PULVERSLURRY-KLARLACKE), VERFAHREN ZU IHRER HERSTELLUNG UND IHRE VERWENDUNG**
POWDER CLEARCOAT DISPERSIONS (POWDER SLURRY CLEARCOATS), METHOD FOR PRODUCING THEM AND THE USE THEREOF
DISPERSIONS DE VERNIS CLAIRS EN POUDRE (VERNIS CLAIRS PULVERULENTS EN SUSPENSION), LEUR PROCEDE DE PRODUCTION ET LEUR UTILISATION

(30) Priorität: 02.06.2000 DE 10027290
(43) Veröffentlichungstag der Anmeldung: 12.03.2003
(73) Patentinhaber: BASF Coatings AG, 48165 Münster (DE)
(72) Erfinder: LASSMANN, Walter, 48165 Münster (DE); HINTZE-BRÜNING, Horst, 48165 Münster (DE); BREMSER, Wolfgang, 48165 Münster (DE); RÖCKRATH, Ulrike, 48308 Senden (DE)
(74) Vertreter: Fitzner, Uwe
(86) Internationale Anmeldenummer: PCT/EP2001/006222
(87) Internationale Veröffentlichungsnummer: WO 2001/092426

(56) Entgegenhaltungen:
- WO-A-97/15616
- DE-A- 19 618 657
- DE-A- 19 841 408
- US-A- 4 476 271

## Beschreibung

Die vorliegende Erfindung betrifft Pulverklarlackdispersionen (Pulverslurry-Klarlacke). Außerdem betrifft die vorliegende Erfindung ein neues Verfahren zur Verhinderung von Oberflächenstörungen in Klarlackierungen. Des weiteren betrifft die vorliegende Erfindung die Verwendung der neuen Pulverslurry-Klarlacke in der Automobillackierung, der Lackierung von Bauwerken im Innen- und Außenbereich, der Lackierung von Möbeln, Türen und Fenstern und der industriellen Lackierung, inklusive Coil Coating und Container Coating.

Farb- und/oder effektgebende Lackierungen von Kraftfahrzeugkarosserien, insbesondere PKW-Karosserien, bestehen heute vorzugsweise aus mehreren Lackschichten, die übereinander appliziert werden und unterschiedliche Eigenschaften aufweisen.

Beispielsweise werden nacheinander eine elektrisch abgeschiedene Elektrotauchlackierung (ETL) als Grundierung, eine Füllerlackierung oder Steinschlagschutzgrundierung, eine Basislackierung und eine Klarlackierung auf ein Substrat aufgebracht. Hierbei dient die ETL insbesondere dem Korossionsschutz des Blechs. Sie wird von der Fachwelt häufig auch als Grundierung bezeichnet. Die Füllerlackierung dient der Abdeckung von Unebenheiten des Untergrundes und gewähren aufgrund ihrer Elastizität die Steinschlagbeständigkeit. Gegebenenfalls kann die Füllerlackierung noch zur Verstärkung des Deckvermögens und zur Vertiefung des Farbtons der Lackierung dienen. Die Basislackierung steuert die Farben und/oder die optischen Effekte bei. Die Klarlackierung dient der Verstärkung der optischen Effekte und dem Schutz der Lackierung vor mechanischer und chemischer Schädigung. Basislackierung und Klarlackierung werden häufig auch zusammenfassend als Decklackierung bezeichnet. Ergänzend wird noch auf Römpp Lexikon Lacke und Druckfarben, Georg Thieme Verlag, Stuttgart, New York, 1998, Seiten 49 und 51, "Automobillacke" verwiesen.

Es ist ein wichtiges Ziel der modernen Automobillackierung, die Menge der bei der Lackierung freigesetzten Menge an organischen Lösemitteln signifikant zu verringern, wenn nicht gar auf Null zu bringen. Entsprechende Lacke, wie ETL, wäßrige Füller oder wäßrige Klarlacke, Pulverlacke oder Pulverslurry-Klarlacke, stehen zur Verfügung.

Hiervon bieten die Pulverslurry-Klarlacke, wie sie beispielsweise aus den US-Patentschriften US 4,268,542 A 1 und US 5,379,947 A 1 und den Patentanmeldungen EP 0 714 958 A 2, DE 195 40 977 A 1, DE 195 18 392 A 1, DE 196 17 086 A 1, DE-A-196 13 547, EP 0 652 264 A 1, DE 196 18 657 A 1, DE 196 52 813 A 1, DE 196 17 086 A 1, DE 198 14 471 A 1 oder DE 198 35 206 A 1 bekannt sind, besondere Vorteile: Zum einen können sie wie die Pulverlacke lösemittelfrei hergestellt und appliziert werden, andererseits können bei der Applikation die üblichen und bekannten Spritzverfahren für flüssige Beschichtungsstoffe angewandt werden:

Aus der US 4,476,271 sind Pulverklarlackdispersionen bekannt, die Addukte von Ethylenoxid an mindestens ein Glykol enthalten. Es ist in diesem Dokument jedoch nicht beschrieben, daß zusammen mit den Addukten 0,1 bis 1,9 Gewichtsteile eines organischen Lösungsmittels von hoher Lösekraft verwendet werden.

Nachteilig für die bisher bekannten Pulverslurry-Klarlacke ist, daß die hieraus hergestellten Klarlackierungen manchmal Oberflächenstörungen wie Dellen oder Krater sowie Agglomerate aufweisen, die den ansonsten vorzüglichen optischen Gesamteindruck verschlechtern. Dieses Problem konnte bisher auch nicht durch die Zugabe von Zusatzstoffen wie Netzmittel, Emulgatoren, Dispergierhilfsmittel oder Entschäumer bei der Herstellung der Pulverslurry-Klarlacke völlig behoben werden.

Aufgabe der vorliegenden Erfindung ist es, neue Pulverklanackdispersionen (Pulverslurry-Klarlacke) zu finden, die - wie die bisher bekannten Pulverslurry-Klarlacke - Klarlackierungen eines vorzüglichen optischen Gesamteindrucks, einer hohen Kratzfestigkeit, Chemikalienbeständigkeit und Witterungsbeständigkeit, indes ohne Oberflächenstörungen wie Dellen, Krater oder Agglomerate liefern.

Demgemäß wurden die neuen Pulverklarlackdispersionen (Pulverslurry-Klarlacke) gefunden, die herstellbar sind, indem man einen Pulverklarlack in einem wäßrigen Medium dispergiert und die resultierende Pulverslurry naß vermahlt, wobei der Pulverslurry vor ihrer Naßvermahlung mindestens ein Addukt von Ethylenoxid und/oder Propylenoxid an mindestens ein Glykol zugesetzt wird und zusammen mit dem Addukt 0,1 bis 1,9 Gewichtsteile mindestens eines organischen Lösemittels von hoher Lösekraft auf 100 Gewichtsteile Festkörper des Pulverslurry-Klarlacks verwendet werden.

Im folgenden werden die neuen Pulverklarlackdispersionen oder Pulverslurry-Klarlacke als "erfindungsgemäße Pulverslurry-Klarlacke" bezeichnet.

Weitere erfindungsgemäße Gegenstände gehen aus der Beschreibung hervor.

Im Hinblick auf den Stand der Technik war es überraschend und für den Fachmann nicht vorhersehbar, daß durch die erfindungsgemäße Verwendung von Addukten von Ethylenoxid und/oder Propylenoxid an Glykole zusammen mit 0,1 bis 1,9 Gewichtsteilen mindestens eines organischen Lösemittels von hoher Lösekraft auf 100 Gewichtsteile Festkörper des Pulverslurry-Klarlacks Pulverslurry-Klarlacke resultieren, die Klarlackierungen eines vorzüglichen optischen Gesamteindrucks, einer hohen Kratzfestigkeit, Chemikalienbeständigkeit und Witterungsbeständigkeit, indes ohne Oberflächenstörungen wie Dellen, Krater oder Agglomerate liefern.

Die erfindungsgemäßen Pulverslurry-Klarlacke enthalten mindestens einen feinverteilten dimensionsstabilen Bestandteil, d.h. einen Pulverlack, als disperse Phase und ein wäßriges Medium als kontinuierliche Phase.

Der feinverteilte, dimensionsstabile Bestandteil oder der Pulverlack kann fest und/oder hochviskos sein. Im Rahmen der vorliegenden Erfindung bedeutet "hochviskos", daß sich die Teilchen unter den üblichen und bekannten Bedingungen der Herstellung, der Lagerung und der Anwendung von Pulverslurry-Klarlacken oder Pulverlacken im wesentlichen wie feste Teilchen verhalten. Vorzugsweise ist der Pulverlack fest.

Die einzelnen Teilchen des feinverteilten Bestandteils oder des Pulverlacks sind außerdem dimensionsstabil. Im Rahmen der vorliegenden Erfindung bedeutet "dimensionsstabil", daß die Teilchen unter den üblichen und bekannten Bedingungen der Lagerung und der Anwendung von Pulverslurry-Klarlacken und Pulverlacken, wenn überhaupt, nur geringfügig agglomerieren und/oder in kleinere Teilchen zerfallen; sondern auch unter dem Einfluß von Scherkräften im wesentlichen ihre ursprünglichen Form bewahren.

Vorzugsweise liegt der Festkörpergehalt des erfindungsgemäßen Pulverslurry-Klarlacks bei 10 bis 80, bevorzugt 15 bis 75, besonders bevorzugt 20 bis 70, ganz besonders bevorzugt 25 bis 70 und insbesondere 30 bis 65 Gew.-%, jeweils bezogen auf die erfindungsgemäße Pulverslurry.

Vorzugsweise liegt die mittlere Teilchengröße der feinverteilten dimensionsstabilen Bestandteile des erfindungsgemäßen Pulverslurry-Klarlacks bei 0,8 bis 40 µm, bevorzugt 0,8 bis 20 µm, und besonders bevorzugt bei 2 bis 6 µm. Unter mittlerer Teilchengröße wird der nach der Laserbeugungsmethode ermittelte 50%-Medianwert verstanden, d.h., 50% der Teilchen haben einen Teilchendurchmesser ≤ dem Medianwert und 50% der Teilchen einen Teilchendurchmesser ≥ dem Medianwert. Generell findet die Teilchengröße der feinverteilten dimensionstabilen Bestandteile ihre obere Begrenzung dann, wenn die Teilchen aufgrund ihrer Größe beim Einbrennen nicht mehr vollständig verlaufen können und damit der Filmverlauf negativ beeinflußt wird. Als Obergrenze werden 40 µm für sinnvoll erachtet, da ab dieser Teilchengröße mit einer Verstopfung der Spülkanäle der hochempfindlichen Applikationsapparaturen zu rechnen ist.

Pulverslurry-Klarlacke mit derartigen mittleren Teilchengrößen weisen ein besseres Applikationsverhalten auf und zeigen bei den applizierten Filmstärken von > 30µm, wie sie derzeitig in der Automobilindustrie bei der Erstlackierung von Automobilen praktiziert werden, überraschenderweise eine deutlich geringere Neigung zu Kochern und zum "mudcracking" als herkömmliche Kombinationen von Füller, Basislack und Klarlack auf.

Der erfindungsgemäße Pulverslurry-Klarlack ist im wesentlichen frei von organischen Lösemitteln (Cosolventien). Im Rahmen der vorliegenden Erfindung bedeutet dies, daß sie einen Restgehalt an flüchtigen Lösemitteln von < 5 Gew.-%, bevorzugt < 3 Gew.-% und besonders bevorzugt < 2 Gew.-% .-%, bezogen auf das Gesamtgewicht des Pulverslurry-Klarlacks, haben.

Der erfindungswesentliche Bestandteil der erfindungsgemäßen Pulverslurry-Klarlacke ist mindestens ein Addukte von Ethylenoxid und/oder Propylenoxid an mindestens ein Glykol, insbesondere Ethylenglykol, 1,3- und/oder 1,2-Propylenglykol oder 1,2-, 1,3- und/oder 1,4-Butylenglykol.

Beispiele gut geeigneter Addukte sind Polyethylenglykole, Polypropylenglykole, Blockmischpolymerisate von Ethylenoxid und Propylenoxid (Pluronics®) oder Polytetramethylenglykole (Polytetrahydrofurane) (vgl. Römpp Lexikon Lacke und Druckfarben, Georg Thieme Verlag, 1998, Seite 457, "Polyalkylenglykole"), von denen die Addukte von Propylenoxid an 1,3- und/oder 1,2-Propylenglykol, d.h. die Polypropylenglykole, besonders vorteilhaft sind und daher erfindungsgemäß besonders bevorzugt verwendet werden.

Besonders gut geeignete Polypropylenglykole weisen ein zahlenmittleres Molekulargewicht von 350 bis 1.000, bevorzugt 400 bis 950, besonders bevorzugt 450 bis 900, ganz besonder bevorzugt 500 bis 850 und insbesondere 550 bis 800 Dalton auf.

Die Polypropylenglykole sind kommerzielle Produkte und werden beispielsweise von der Firma BASF Aktiengesellschaft unter der Marke Pluriol® 400, 600 oder 900 vertrieben, wobei die nachgestellten Ziffern das Molekulargewicht oder dessen Größenordnung angeben. Hiervon ist Pluriol® 600 ganz besonders vorteilhaft und wird daher erfindungsgemäß besonders bevorzugt verwendet.

Der Gehalt der erfindungsgemäßen Pulverslurry-Klarlacke an den erfindungsgemäß zu verwendenden Addukten liegt vorzugsweise bei 0,01 bis 2,0, bevorzugt 0,1 bis 1,5, besonders bevorzugt 0,2 bis 1,2, ganz besondersbevorzugt 0,25 bis 1,0 und insbesondere 0,3 bis 0,8 Gew.-%, jeweils bezogen auf den Festkörper des erfindungsgemäßen Pulverslurry-Klarlacks.

Hier und im folgenden wird unter Festkörper die Summe der Bestandteile des erfindungsgemäßen Pulverslurry-Klarlacks verstanden, die nach der Aushärtung den Festkörper der Klarlackierung aufbauen.

Überraschenderweise kann der erfindungsgemäße Effekt der vorstehend beschriebenen Addukte durch geringe Mengen an Lösemittel mit hoher Lösekraft verstärkt werden. Unter geringen Mengen sind hierbei Mengen von 0,1 bis 1,9, vorzugsweise 0,2 bis 1,8, besonders bevorzugt 0,3 bis 1,7, ganz besonders bevorzugt 0,4 bis 1,6 und insbesondere 0,5 bis 1,5 Gewichtsteilen pro 100 Gewichtsteile Festkörper des erfindungsgemäßen Pulverslurry-Klarlacks zu verstehen.

Geeignete organische Lösemittel werden beispielsweise unter der Marke Solvenon® (insbesondere Solvenon® IPP, Isopropoxypropanol) von der Firma BASF Aktiengesellschaft oder unter der Marke Solvesso® von der Firma Exxon/Esso vertrieben. Von diesen ist Solvenon® IPP besonders vorteilhaft und wird daher besonders bevorzugt verwendet.

Die erfindungsgemäßen Pulverslurry-Klarlacke können physikalisch, thermisch, mit aktinischer Strahlung oder thermisch und mit aktinischer Strahlung (Dual Cure) härtbar sein. Die thermisch härtbaren erfindungsgemäßen Pulverslurry-Klarlacke wiederum können selbstvernetzend oder fremdvernetzend sein.

Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungsstoff, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthaltend sind, die für eine Vernetzung notwendig sind. Als fiemdvernetzend werden dagegen solche Beschichtungsstoffe, Klebstoffe und Dichtungsmassen bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Im Rahmen der vorliegenden Erfindung ist unter aktinischer Strahlung elektromagnetische Strahlung, wie nahes Infrarot (NIR), sichtbares Licht, UV-Strahlung oder Röntgenstrahlung, insbesondere UV-Strahlung, und Korpuskularstrahlung wie Elektronenstrahlung zu verstehen.

Werden die thermische und die Härtung mit aktinischem Licht gemeinsam angewandt, spricht man auch von "Dual Cure" und "Dual-Cure-Pulverslurry-Klarlack".

Die erfindungsgemäßen Pulverslurry-Klarlacke enthalten mindestens ein Bindemittel.

Die Bindemittel sind oligomere und polymere Harze.

Erfindungsgemäß ist es von Vorteil, wenn die Mindestfilmbildetemperatur der Bindemittel mindestens 0 °C, bevorzugt mindestens 10, besonders bevorzugt mindestens 15, ganz besonders bevorzugt mindestens 20 und insbesondere mindestens 25 °C beträgt. Die Mindestfilmbildetemperatur kann ermittelt werden, indem eine wäßrige Dispersion des Bindemittels mittels einer Rakel auf eine Glasplatte aufgezogen oder ein feinverteiltes Bindemittelpulver auf eine Glasplatte appliziert und auf einem Gradientenofen erwärmt wird. Die Temperatur, bei der die pulverförmige Schicht verfilmt, wird als Mindestfilmbildetemperatur bezeichnet. Ergänzend wird auf Römpp Lexikon Lacke und Druckfarben, Georg Thieme Verlag, Stuttgart, New York, 1998, »Mindestfilmbildetemperatur«, Seite 391, verwiesen.

Beispiele für geeignete Bindemittel sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester-Polyurethane.

Von diesen Bindemitteln weisen die (Meth)Acrylat(co)polymerisate Vorteile auf und werden deshalb häufiger verwendet.

Die selbstvernetzenden Bindemittel der thermisch härtbaren Pulverlacke und Pulverslurry-Klarlacke und der erfindungsgemäßen Dual-Cure-Pulverlacke und - Pulverslurry-Klarlacke enthalten reaktive funktionelle Gruppen, die mit Gruppen ihrer Art oder mit komplementären reaktiven funktionellen Gruppen Vernetzungsreaktionen eingehen können. Die fremdvernetzenden Bindemittel enthalten reaktive funktionelle Gruppen, die mit komplementären reaktiven funktionellen Gruppen, die in Vernetzungsmitteln vorliegen, Vernetzungsreaktionen eingehen können. Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R' und R" stehen für gleiche oder verschiedene aliphatische Reste oder sind miteinander zu einem aliphatischen oder heteroaliphatischen Ring verknüpft.

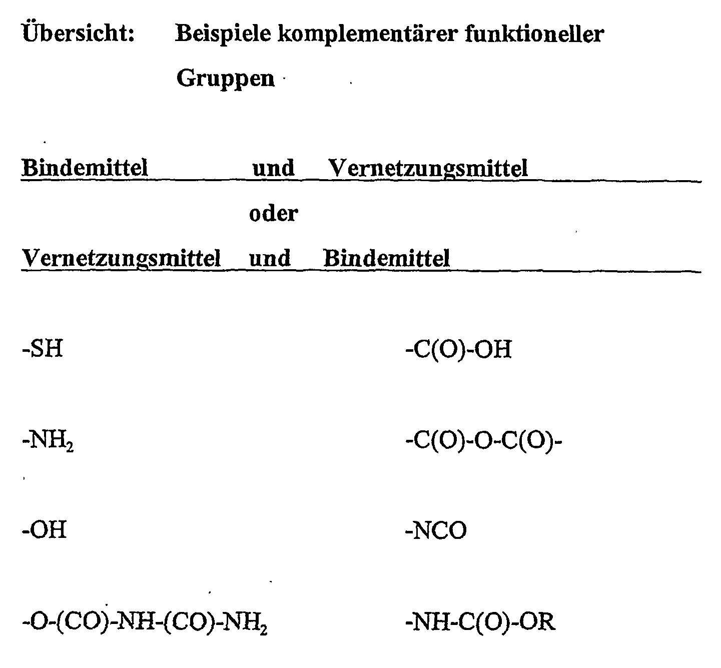

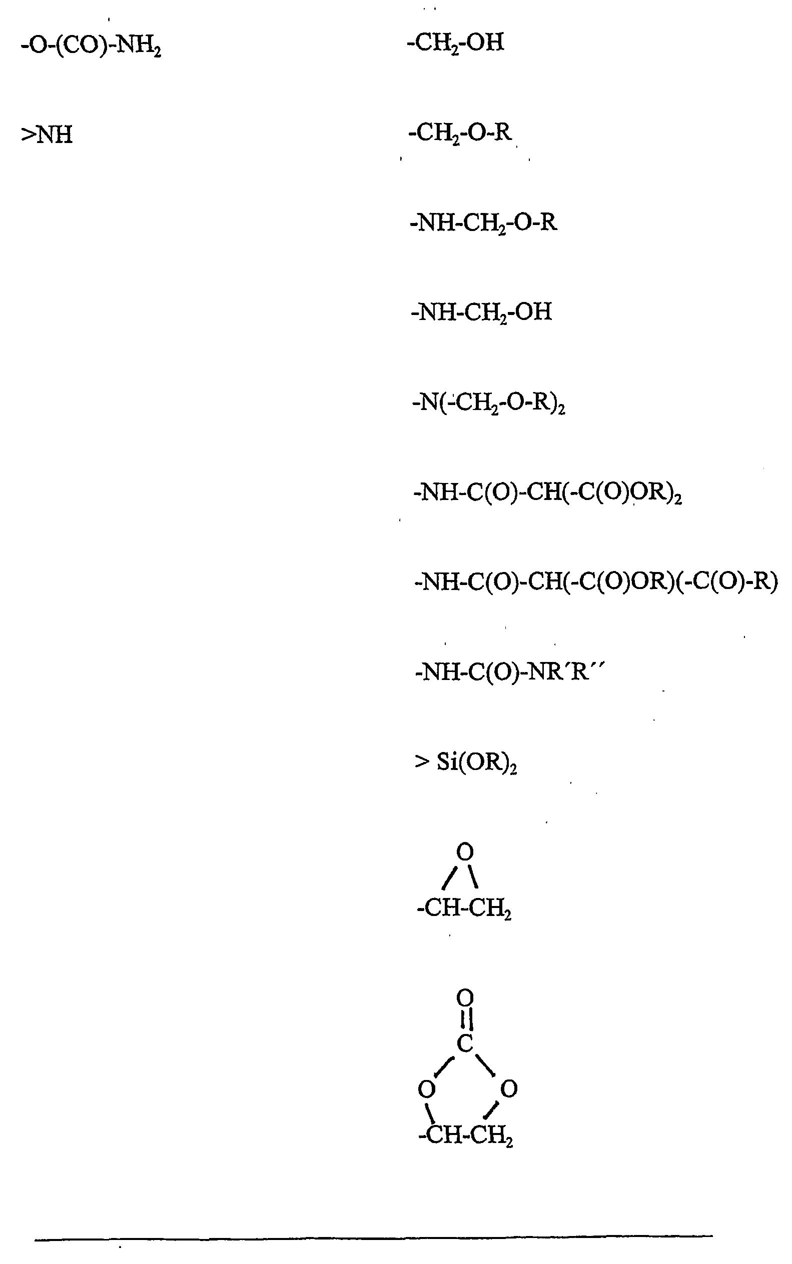

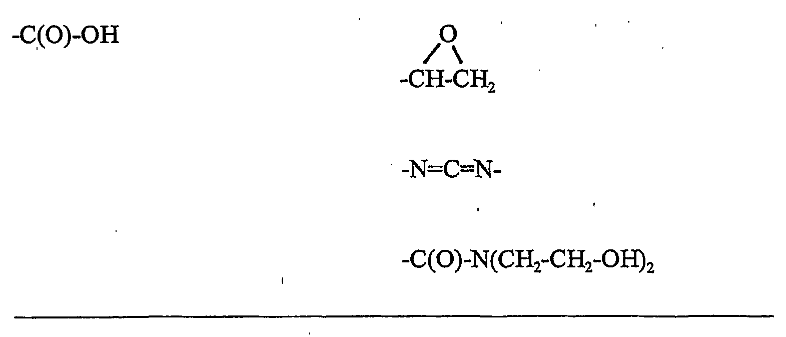

Die Auswahl der jeweiligen komplementären Gruppen richtet sich zum einen danach, daß sie bei der Herstellung, der Lagerung, der Applikation und dem Aufschmelzen der erfindungsgemäßen Pulverslurry-Klarlacke keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei den thermisch oder thermisch und mit aktinischer Strahlung härtbaren erfindungsgemäßen Pulverslurry-Klarlacken Vernetzungstemperaturen von 60 bis 180°C angewandt. Es werden daher vorzugsweise Thio-, Hydroxyl-, N-Methylolamino- N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel mit Anhydrid-, Carboxyl-, Epoxy-, blockierten Isocyanat-, Urethan-, Methylol-, Methylolether-, Siloxan-, Carbonat-, Amino-, Hydroxy- und/oder beta-Hydroxyalkylamidgruppen, bevorzugt Epoxy-, beta-Hydroxyalkylamid-, blockierte Isocyanat-, Urethan- oder Alkoxymethylaminogruppen, andererseits angewandt.

Im Falle selbstvernetzender erfindungsgemäßer Pulverlacke und Pulverslurry-Klarlacke enthalten die Bindemittel insbesondere Methylol-, Methylolether- und/oder N-Alkoxymethylaminogruppen.

Komplementäre reaktive funktionelle Gruppen, die für die Verwendung in den erfindungsgemäßen Pulverlacken und Pulverslurry-Klarlacke besonders gut geeignet sind, sind
- Carboxylgruppen einerseits und Epoxidgruppen und/oder beta-Hydroxyalkylamidgruppen andererseits sowie
- Hydroxylgruppen einerseits und blockierte Isocyanat-, Urethan- oder Alkoxymethylaminogruppen andererseits.

Die Funktionalität der Bindemittel bezüglich der vorstehend beschriebenen reaktiven funktionellen Gruppen kann sehr breit variieren und richtet sich insbesondere nach der Vemetzungsdichte, die man erzielen will, und/oder nach der Funktionalität der jeweils angewandten Vernetzungsmittel. Beispielsweise liegt im Falle carboxylgruppenhaltiger Bindemittel die Säurezahl vorzugsweise bei 10 bis 100, bevorzugt 15 bis 80, besonders bevorzugt 20 bis 75, ganz besonders bevorzugt 25 bis 70 und insbesondere 30 bis 65 mg KOH/g. Oder im Falle hydroxylgruppenhaltiger Bindemittel liegt die OH-Zahl vorzugsweise bei 15 bis 300, bevorzugt 20 bis 250, besonders bevorzugz 25 bis 200, ganz besonders bevorzugt 30 bis 150 und insbesondere 35 bis 120 mg KOH/g. Oder im Falle epoxidgruppenhaltiger Bindemittel liegt das Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und indesondere 440 bis 1.900.

Die vorstehend beschriebenen komplementären funktionellen Gruppen können nach den üblichen und bekannten Methoden der Polymerchemie in die Bindemittel eingebaut werden. Dies kann beispielsweise durch den Einbau von Monomeren, die die entsprechenden reaktiven funktionellen Gruppen tragen, und/oder mit Hilfe polymeranaloger Reaktionen geschehen.

Beispiele geeigneter olefinisch ungesättigter Monomere mit reaktiven funktionellen Gruppen sind
(a1) Monomere, welche mindestens eine Hydroxyl-, Amino-, Alkoxymethylamino-, Carbamat-, Allophanat- oder Iminogruppe pro Molekül tragen wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat,-crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, -monomethacrylat,-monoethacrylat, -monocrotonat, -monomaleinat, -monofumarat oder -monoitaconat; Umsetzungsprodukte aus cyclischen Estern, wie z.B. epsilon-Caprolacton und diesen Hydroxyalkyl- oder - cycloalkylestern;
   - olefinisch ungesättigte Alkohole wie Allylalkohol;
   - Polyole wie Trimethylolpropanmono- oder diallylether oder Pentaerythritmono-, -di- oder triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
   - Aminoethylacrylat, Aminoethylmethacrylat, Allylamin oder N-Methyliminoethylacrylat;
   - N,N-Di(methoxymethyl)aminoethylacrylat oder -methacrylat oder N,N-Di(butoxymethyl)aminopropylacrylat oder -methacrylat;
   - (Meth)Acrylsäureamide wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
   - Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US-A-3,479,328, US-A-3,674,838, US-A-4,126,747, US-A- 4,279,833 oder US-A-4,340,497 beschrieben;
   - Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder-cycloalkylestern der (Meth)Acrylsäure uund/oder weiterer hydroxylgruppehaltiger. Monomere (a1).
(a2) Monomere, welche mindestens eine Säuregruppe pro Molekül tragen, wie
   - Acrylsäure, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
(a3) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Sie werden vorzugsweise zur Herstellung von (Meth)Acrylatcopolymerisaten, insbesondere glycidylgruppenhaltigen, verwendet.

Höherfunktionelle Monomere der vorstehend beschriebenen Art werden im allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate, insbesondere der (Meth)Acrylatcopolymerisate, führen, es sei denn, man will gezielt vernetzte polymere Mikroteilchen herstellen.

Beispiele geeigneter Monomereinheiten zur Einführung reaktiver funktioneller Gruppen in Polyester oder Polyester-Polyurethane sind 2,2-Dimethylolethyl- oder -propylamin, die mit einem Keton blockiert sind, wobei die resultierende Ketoximgruppe nach dem Einbau wieder hydrolysiert wird; oder Verbindungen, die zwei Hydroxylgruppen oder zwei primäre und/oder sekundäre Aminogruppen sowie mindestens eine Säuregruppe, insbesondere mindestens eine Carboxylgruppe und/oder mindestens eine Sulfonsäuregruppe, enthalten, wie Dihydroxypropionsäure, Dihydroxybernsteinsäure, Dihydroxybenzoesäure, 2,2-Dimethylolessigsäure, 2,2-Dimethylolpropionsäure, 2,2-Dimethylolbuttersäure, 2,2-Dimenthylolpentansäure, ###,###-Diaminovaleriansäure, 3,4-Diaminobenzoesäure, 2,4-Diaminotoluolsulfonsäure oder 2,4-Diamino-diphenylethersulfonsäure.

Ein Beispiel zur Einführung reaktiver funktioneller Gruppen über polymeranaloge Reaktionen ist die Umsetzung Hydroxylgruppen enthaltender Harze mit Phosgen, wodurch Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Harzen. Weitere Beispiele geeigneter Methoden dieser Art sind aus den Patentschriften US 4,758,632 A1, US 4,301,257 A 1 oder US 2,979,514 A 1 bekannt.

Die Bindemittel der erfindungsgemäßen Dual-Cure-Pulverslurries oder der rein mit aktinischer Strahlung härtbaren erfindungsgemäßen Pulverslurries enthalten desweiteren im statistischen Mittel mindestens eine, vorzugsweise mindestens zwei, Gruppe(n) mit mindestens einer mit aktinischer Strahlung aktivierbaren Bindung pro Molekül.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff , Kohlenstoff-Sauerstoff , Kohlenstoff-Stickstoff-, Kohlenstoff-Phosphor -oder Kohlenstoff-Silizium-Einzelbindungen oder - Doppelbindungen. Von diesen sind die Kohlenstoff-KohlenstoffDoppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein.

Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Das Dual-Cure-Bindemittel oder das rein mit aktinischer Strahlung härtbare Bindemittel enthält im statistischen Mittel mindestens eine der vorstehend beschriebenen mit aktinischer Strahlung aktivierbaren Gruppen. Dies bedeutet, daß die Funktionalität des Bindemittels in dieser Hinsicht ganzzahlig, d.h., beispielsweise gleich zwei, drei, vier, fünf oder mehr ist, oder nicht ganzzahlig, d.h., beispielsweise gleich 2,1 bis 10,5 oder mehr ist. Welche Funktionalität man wählt, richtet sich nach den Erfordernissen, die an die jeweilige erfindungsgemäße Dual-Cure-Pulverslurry oder die mit aktinischer Strahlung härtbare erfindungsgemäße Pulverslurry gestellt werden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentaclienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen ehaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Es können in den Dual-Cure-Pulverlacken indes auch Gemische aus rein thermisch härtbaren und rein mit aktinischer Strahlung härtbaren Bindemitteln angewandt werden.

Die stoffliche Zusammensetzung der Bindemittel weist im Grunde keine Besonderheiten auf, sondern es kommen
- all die in den US-Patentschrift US 4,268,542 A 1 oder US 5,379,947 A 1 und den Patentanmeldungen DE 27 10 421 A 1, DE 195 40 977 A 1, DE 195 18 392 A1, DE 196 17 086 A1, DE 196 13 547 A1, DE 196 18 657 A1, DE 196 52 813 A 1, DE 196 17 086 A 1, DE 198 14 471 A , DE 198 41 842 A 1 oder DE 198 41 408 A 1, den nicht vorveröffentlichten deutschen Patentanmeldungen DE 199 08 018.6 oder DE 199 08 013.5 oder der europäischen Patentschrift EP 0 652 264 A 1 beschriebenen, für die Verwendung in thermisch oder thermisch und mit aktinischer Strahlung härtbaren Pulverklarlack-Slurries vorgesehenen Bindemittel,
- all die in den Patentanmeldungen DE 198 35 296 A 1, DE 197 36 083 A 1 oder DE 198 41 842 A 1 beschriebenen, für die Verwendung in Dual-Cure-Klarlacken vorgesehenen Bindemittel oder
- all die in der deutschen Patentanmeldung DE 42 22 194 A 1, der Produkt-Information der Firma BASF Lacke + Farben AG, "Pulverlacke", 1990, oder der Firmenschrift von BASF Coatings AG "Pulverlacke, Pulverlacke für industrielle Anwendungen", Januar, 2000 beschriebenen, für die Verwendung in thermisch härtbaren Pulverklarlacken vorgesehenen Bindemittel
in Betracht.

Hierbei werden bei den thermisch oder thermisch und mit aktinischer Strahlung härtbaren Pulverslurries vorwiegend (Meth)Acrylatcopolymerisate verwendet.

Beispiele geeigneter (Meth)Acrylatcopolymerisate sind die epoxidgruppenhaltigen (Meth)Acrylatcopolymerisate mit einem Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und insbesondere 440 bis 1.900, einem zahlenmittleren Molekulargewicht (gelpermeationschromatographisch unter Verwendung eines Polystyrolstandards bestimmt) von vorzugsweise 2.000 bis 20.000 und insbesondere 3.000 bis 10.000, und einer Glasübergangstemperatur (T_{G}) von vorzugsweise 30 bis 80, bevorzugt 40 bis 70 und insbesondere 40 bis 60°C (gemessen mit Hilfe der differential scanning calometrie (DSC), wie sie insbesondere für die Verwendung in thermisch härtbaren Pulverklarlack-Slurries in Betracht kommen (s.o.) und wie sie außerdem noch in den Patentschriften und Patentanmeldungen EP 0 299 420 A 1, DE 22 14 650 B 1, DE 27 49 576 B 1, US 4,091,048 A 1 oder US 3,781,379 A 1 beschrieben werden.

Als zusätzliche Bindemittel für die erfindungsgemäßen Dual-Cure-Pulverslurries oder als alleinige Bindemittel für die rein mit aktinischer Strahlung härtbaren erfindungsgemäßen Pulverslurries kommen die in den den europäischen Patentanmeldungen EP 0 928 800 A 1, EP 0 636 669 A 1, EP 0 410 242 A 1, EP 0 783 534 A 1, EP 0 *650* 978 A 1, EP 0 650 979 A 1, EP 0 *650* 985 A 1, EP 0 540 884 A 1, EP 0 568 967 A 1, EP 0 054 505 A 1 oder EP 0 002 866 A 1, den deutschen Patentanmeldungen DE 198 35 206 A 1, DE 197 09 467 A 1, DE 42 03 278 A 1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A 1, US 4,675,234 A 1, US 4,634,602 A 1, 4,424,252 A 1, US 4,208,313 A 1, US 4,163,810 A 1, US 4,129,488 A1, US 4,064,161 A 1 oder US 3,974,303 A 1 beschriebenen, zur Verwendung in UV-härtbaren Klarlacken, Pulverklarlacken und Pulverslurry-Klarlacken vorgesehenen Bindemittel in Betracht.

Auch die Herstellung der Bindemittel weist keine methodischen Besonderheiten auf, sondern erfolgt mit Hilfe der üblichen und bekannten Methoden der Polymerenchemie, wie sie beispielsweise in den vorstehend aufgeführten Patentschriften im Detail beschrieben werden.

Beispiele geeigneter Herstellverfahren für (Meth)Acrylatcopolymerisate werden in den europäischen Patentanmeldungen oder EP 0 767 185 A1, den deutschen Patenten DE 22 14 650 B 1 oder DE 27 49 576 B 1 und den amerikanischen Patentschriften US 4,091,048 A 1, US 3,781,379 A 1, US 5,480,493 A 1, US 5,475,073 A 1 oder US 5,534,598 A 1 oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Die Herstellung von Polyestern und Alkydharzen wird beispielsweise noch in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Die Herstellung von Polyurethanen und/oder acrylierten Polyurethanen wird beispielsweise noch in den Patentanmeldungen EP 0 708 788 A 1, DE 44 01 544 A 1 oder DE 195 34 361 A 1 beschrieben.

Der Gehalt der dispersen Phase, d.h. der feinverteilten, dimensionsstabilen Bestandteile, der erfindungsgemäßen Pulverslurry-Klarlacke an Bindemitteln kann sehr breit variieren und richtet sich vor allem danach, ob sie physikalisch härtbar, thermisch selbstvernetzend härtbar und/oder mit aktinischer Strahlung härtbar sind. In beiden Fällen kann er vorzugsweise 20 bis 99,99, bevorzugt 25 bis 99,9, besonders bevorzugt 30 bis 99,8 ganz besonders bevorzugt 35 bis 99,75 und insbesondere 40 bis 99,7 Gew.%, jeweils bezogen auf den Festkörpergehalt der pigmentierten Pulverslurry, betragen. In den anderen Fällen (thermisch und/oder mit aktinischer Strahlung fremdvernetzend härtbar) liegt der Bindemittelgehalt vorzugsweise bei 10 bis 80, bevorzugt 15 bis 75, besonders bevorzugt 20 bis 70, ganz besonders bevorzugt 25 bis 65 und insbesondere 30 bis 60 Gew.-%, jeweils bezogen auf den Festkörper des erfindungsgemäßen Pulverslurry-Klarlacks.

Die thermisch oder thermisch und mit aktinischer Strahlung härtbaren, fremdvernetzenden erfindungsgemäßen Pulverslurry-Klarlacke enthalten mindestens ein Vernetzungsmittel; das die zu den reaktiven funktionellen Gruppen der Bindemittel komplementären reaktiven funktionellen Gruppen enthält. Der Fachmann kann daher die für einen gegebenen Pulverslurry-Klarlack geeigneten Vernetzungsmittel leicht auswählen.

Beispiele geeigneter Vernetzungsmittel sind
- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP 0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A 1 oder 198 41 408 A 1 beschrieben werden, insbesondere Dodecandisäure,
- Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden,
- blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden,
- beta-Hydroxyalkylamide wie N,N,N',N'-Tetrakis(2-hydroxyethyl)adipamid oder N,N,N',N'-Tetrakis(2-hydroxypropyl)-adipamid und/oder
- Tris(alkoxycarbonylamino)-triazine, wie sie in den Patentschriften US 4,939,213 A 1, US 5,084,541 A 1, US 5,288,865 A 1 oder EP 0 604 922 A 1 beschrieben werden.

Der Gehalt der erfindungsgemäßen Pulverlacke und Pulverslurry-Klarlacke an den Vernetzungsmitteln kann ebenfalls sehr breit variieren und richtet sich nach den Erfordernissen des Einzelfalls, insbesondere nach der Anzahl der vorhandenen reaktiven funktionellen Gruppen. Vorzugsweise liegt er bei 1,0 bis 40, bevorzugt 2,0 bis 35, besonders bevorzugt 3,0 bis 30, ganz besonders bevorzugt 4,0 bis 27 und insbesondere 5,0 bis 25 Gew.-%, jeweils bezogen auf den Festkörper des erfindungsgemäßen Pulverslurry-Klarlacks.

Außer den vorstehend beschriebenen Bestandteilen können die erfindungsgemäßen Pulverslurry-Klarlacke noch mindestens einen Zusatzstoff enthalten. Dieser kann je nach seinen physikalisch chemischen Eigenschaften und/oder seiner Funktion im wesentlichen in den feinverteilten, dimensionsstabilen Bestandteilen der erfindungsgemäßen Pulverslurry-Klarlacke im wesentlichen in der kontinuierlichen wäßrigen Phase vorliegen.

Beispiele geeigneter Zusatzstoffe sind
- thermisch härtbare Reaktivverdünner wie stellungsisomere Diethyloctandiole oder Hydroxylgruppen enthaltende hyperverzweigte Verbindungen oder Dendrimere wie sie in den deutschen Patentanmeldungen DE 198 05 421 A 1, DE 198 09 643 A 1 oder DE 198 40 405 A 1 beschrieben werden;
- mit aktinischer Strahlung härtbare Reaktivverdünner, wie die in Römpp Lexikon Lacke und Druckfarben, Georg Thieme Verlag, Stuttgart, New York, 1998, auf Seite 491 unter dem Stichwort »Reaktivverdünner« beschriebenen;
- Katalysatoren für die Vernetzung wie Dibutylzinndilaurat, Lithiumdecanoat oder Zinkoctoat, mit Aminen blockierte organische Sulfonsäuren, quarternäre Ammoniumverbindungen, Amine, Imidazol und Imidazolderivate wie 2-Styrylimidazol, 1-Benzyl-2-methylimidazol, 2-Methylimidazol und 2-Butylimidazol, wie sie in dem belgischen Patent Nr. 756,693 beschrieben werden, oder Phosphonium-Katalysatoren wie Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphohium-Acetat-Essigsäurekomplex, wie sie beispielsweise in den US-Patentschriften US 3,477,990 A 1 oder US 3,341,580 A 1 beschrieben werden;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Photoinitiatoren, wie sie in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben werden;
- Antioxidantien wie Hydrazine und Phosphorverbindungen
- UV-Absorber wie Triazine und Benztriphenol;
- Lichtschutzmittel wie HALS-Verbindungen, Benztriazole oder Oxalanilide;
- Verlaufmittel;
- Radikalfänger und Polymerisationsinhibitoren wie organische Phosphite oder 2,6 Di-tert-Butylphenol-Derivate;
- Slipadditive;
- Entschäumer;
- Emulgatoren, insbesondere nicht ionische Emulgatoren wie alkoxylierte Alkanole, Phenole und Alkylphenole, anionische Emulgatoren wie Alkalisalze oder Ammoniumsalze von Alkancarbonsäuren, Alkansulfonsäuren und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane, wie sie beispielsweise im Detail in der Patentanmeldung DE 198 35 296 A1 beschrieben werden, insbesondere in Verbindung mit den nachstehend beschriebenen assoziativen Verdickern auf Polyurethanbasis;
- Haftvermittler wie Tricyclodecandimethanol;
- filmbildende Hilfsmittel wie Cellulose-Derivate;
- Flammschutzmittel;
- Entlüftungsmittel wie Diazadicycloundecan oder Benzoin;
- Wasserrückhaltemittel;
- Rieselbilfen;
- transparente Füllstoffe wie pyrogenes Siliciumdioxid oder Nanopartikel auf der Basis von Siliciumdioxid, Titandioxid oder Zirconiumdioxid;
- rheologiesteuernde Additive (Verdicker), wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Alumimum-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden; insbesondere Kombinationen von ionischen und nicht ionischen Verdickern, wie sie in der Patentanmeldung DE 198 41 842 A 1 zu Einstellung eines strukturviskosen Verhaltens beschrieben werden, oder die Kombination von assoziativen Verdickern auf Polyurethanbasis und Netzmitteln auf Polyurethanbasis, wie sie in der deutschen Patentanmeldung DE 198 35 296 A 1 im Detail beschrieben wird;

Weitere Beispiele geeigneter Zusatzstoffe werden in dem Lehrbuch "Lackadditive" von Johan Bieleman, Wiley-VCH, Weinheim, New York, 1998, beschrieben. Sie werden in den üblichen und bekannten Mengen angewandt.

Die Herstellung der erfindungsgemäßen Pulverslurry-Klarlacke nach dem erfindungsgemäßen Verfahren geht aus von an sich bekannten Verfahren zur Herstellung von Pulverslurry-Klarlacken.

In einer ersten bevorzugten Variante erfolgt die Herstellung der erfindungsgemäßen Pulverslurry-Klarlacke aus den vorstehend beschriebenen Bestandteilen im wesentlichen, wie in den Patentanmeldungen DE 195 40 977 A 1, DE 195 18 392 A 1, DE 196 17 086 A 1, DE-A-196 13 547, DE 196 18 657 A 1, DE 196 52 813 A 1, DE 196 17 086 A 1, DE-A-198 14 471 A 1, DE 198 41 842 A 1 oder DE 198 41 408 A 1 im Detail beschrieben.

Hierbei wird ein an sich bekannter Pulverlack durch Naßvermahlung in Wasser oder einem wäßrigen Medium, d.h. eine Mischung von Wasser und mindestens einem der vorstehend beschriebenen Zusastzstoffe, in eine Pulverslurry überführt.

In einer weiteren bevorzugten Variante der Herstellung der erfindungsgemäßen Pulverslurry-Klarlacke werden die vorstehend beschriebenen Bestandteile in einem organischen Lösemittel emulgiert, wodurch eine Emulsion vom Typ Ölin-Wasser resultiert, hiernach wird das organische Lösemittel entfernt, wodurch sich die emulgierten Tröpfchen verfestigen und eine Pulverslurry resultiert. Hiernach wird die Pulverslurry naßvermahlen.

In einer dritten bevorzugten Variante der Herstellung der erfindungsgemäßen Pulverslurry-Klarlacke wird eine flüssige Schmelze der vorstehend beschriebenen Bestandteile in eine Emulgiervorrichtung vorzugsweise unter Zusatz von Wasser und Stabilisatoren gegeben, die erhaltene Emulsion abgekühlt und filtriert, wodurch eine Pulverslurry resultiert. Um eine hohe Mischgüte erzielen, ist es wesentlich, die Mischung lösemittelfrei in der Schmelze durchzuführen. Demgemäß werden die polymeren Bestandteile als viskose Harzschmelzen in die Dispergieraggregate eingespeist. Hiernach wird die Pulverslurry naßvermahlen.

Für das erfindungsgemäße Verfahren und die erfindungsgemäßen Pulverslurry-Klarlacke ist es wesentlich, daß die vorstehend beschriebenen erfindungsgemäß zu verwendenden Addukte sowie die vorstehend beschriebenen Lösemittel mit hoher Lösekraft den Pulverslurries vor der Naßvermahlung zugesetzt werden. Durch Naßvermahlung der erfindungsgemäß zu verwendenden Addukte sowie ggf. der Lösemittel mit den sonstigen vorstehend beschriebenen Bestandteilen resultieren die erfindungsgemäßen Pulverslurry-Klarlacke.

Methodisch bietet die Naßvermahlung keine Besonderheiten, sondern wird mit Hilfe üblicher und bekannter Vorrichtungen durchgeführt wie beispielsweise Rührwerksmühlen.

Vorzugsweise werden die resultierenden erfindungsgemäßen Pulverslurry-Klarlacke nach der Naßvermahlung noch filtriert. Hierfür werden die üblichen und bekannten Filtrationsvorrichtungen und Filter verwendet, wie sie auch für die Filtration von bekannten Pulverslurries in Betracht kommen. Die Maschenweite der Filter kann breit variieren und richtet sich in erster Linie nach der Teilchengröße und der Teilchengrößenverteilung der Partikel der Suspension. Der Fachmann kann daher die geeigneten Filter leicht anhand dieses physikalischen Parameters ermitteln. Beispiele geeigneter Filter sind Beutelfilter. Diese sind am Markt unter den Marken Pong® oder Cuno® erhältlich. Vorzugsweise werden Beutelfilter mit den Maschenweiten 10 bis 50 µm verwendet, beispielsweise Pong® 10 bis Pong® 50.

Die erfindungsgemäßen Pulverslurry-Klarlacke dienen der Herstellung von Klarlackierungen, insbesondere im Rahmen farb- und/oder effektgebender Mehrschichtlackierungen auf grundierten und ungrundierten Substraten.

Die erfindungsgemäße Klarlackierung oder die farb- und/oder effektgebende Mehrschichtlackierung, enthaltend die erfindungsgemäße Klarlackierung, wird vor allem in der Automobillackierung, der Lackierung von Bauwerken im Innen- und Außenbereich, der Lackierung von Möbeln, Türen und Fenstern und der industriellen Lackierung, inklusive Coil Coating und Container Coating verwendet, wobei alle auf diesen technischen Gebieten üblichen und bekannten Substrate aus Metall, Kunststoff, Glas, Holz, Textil, Leder, Natur- und Kunststein, Beton, Zement oder Verbunden dieser Materialien in Betracht kommen, wobei die elektrisch leitfähigen Substrate bevorzugt sind.

Vorzugsweise ist die erfindungsgemäße farb- und/oder effektgebende Mehrschichtlackierung herstellbar, indem man auf ein Substrat
(1) einen Füller oder Funktionslack auf eine kathodisch abgeschiedene und thermisch gehärtete Elektrotauchlackierung oder naß-in-naß auf eine kathodisch abgeschiedene, nicht oder nur partiell gehärtete Elektrotauchlackschicht appliziert, wonach man
(2) die resultiernde Füllerschicht oder Funktionsschicht für sich alleine thermisch oder thermisch und mit aktinischer Strahlung oder zusammen mit der Elektrotauchlackschicht thermisch oder thermisch und mit aktinischer Strahlung härtet, wodurch die Füllerlackierung, Steinschlagschutzgrundierung oder Funktionslackierung resultiert,
(3) einen Basislack, insbesondere einen Wasserbasislack, auf die Füllerlackierung, Steinschlagschutzgrundierung oder Funktionslackierung appliziert, wodurch eine Basislackschicht resultiert,
(4) die Basislackschicht, ohne sie vollständig zu vernetzen, ablüftet oder trocknet, oder - alternativ - sie physikalisch, thermisch und/oder mit aktinischer Strahlung härtet, wodurch die Basislackierung resultiert,
(5) mindestens einen erfindungsgemäßen Pulverslurry-Klarlack auf die Basislackschicht oder - alternativ - auf die Basislackierung appliziert, wonach man
(6) die Basislackschicht und die resultierenden Pulverslurry-Klarlackschicht(en) gemeinsam thermisch und/oder mit aktinischer Strahlung härtet, oder - alternativ - die Pulverslurry-Klarlackschicht(en) für sich alleine thermisch und/oder mit aktinischer Strahlung härtet wodurch die Basislackierung und die Klarlackierung(en) resultieren.

In einer weiteren bevorzugten Variante ist die erfindungsgemäße farb- und/oder effektgebende Mehrschichtlackierung herstellbar, indem man auf ein Substrat
(1) einen Füller oder Funktionslack auf eine kathodisch abgeschiedene und thermisch gehärtete Elektrotauchlackierung appliziert, wonach man
(2) die resultiernde Füllerschicht oder Funktionsschicht ohne sie vollständig zu vernetzen, ablüftet oder trocknet,
(3) einen Basislack, insbesondere einen Wasserbasislack, auf die Füllerschicht oder Funktionsschicht appliziert, wodurch eine Basislackschicht resultiert,
(4) die Basislackschicht, ohne sie vollständig zu vernetzen ablüftet oder trocknet,
(5) mindestens einen erfindungsgemäßen Pulverslurry-Klarlack auf die Basislackschicht appliziert, wonach man
(6) die Füllerschicht oder Funktionsschicht, die Basislackschicht und die Pulverslurry-Klarlackschicht(en) gemeinsam thermisch und/oder mit aktinischer Strahlung härtet, wodurch die Füllerlackierung, Steinschlagschutzgrundierung oder Funktionslackierung, die Basislackierung und die Klarlackierung(en) resultieren.

Beispiele geeigneter kathodischer Elektrotauchlacke sowie ggf. von Naß-in-naßVerfahren werden in der japanischen Patentanmeldung 1975-142501 (japanische Offenlegungsschrift JP 52-065534 A 2, Chemical Abstracts Referat Nr. 87: 137427) oder den Patentschriften US 4,375,498 A 1, US 4,537,926 A 1, US 4,761,212 A 1, EP 0 529 335 A 1, DE 41 25 459 A 1, EP 0 595 186 A 1, EP 0 074 634 A 1, EP 0 505 445 A 1, DE 42 35 778 A 1, EP 0 646 420 A 1, EP 0 639 660 A 1, EP 0 817 648 A 1, DE 195 12 017 C 1, EP 0 192 113 A 2, DE 41 26 476 A 1 oder WO 98/07794 beschrieben.

Beispiele geeigneter Füller, insbesondere wäßriger Füller, die auch als Steinschlagschutzgrundierungen oder Funktionslackierungen bezeichnet werden, werden in den Patentschriften US 4,537,926 A 1, EP 0 529 335 A1, EP 0 595 186 A 1, EP 0 639 660 A 1, DE 44 38 504 A 1, DE 43 37 961 A 1, WO 89/10387, US 4,450,200 A 1, US 4,614,683 A 1 oder WO 490/26827 beschrieben.

Beispiele geeigneter Basislacke, vorzugsweise Wasserbasislacke, insbesondere Wasserbasislacke auf Polyurethanbasis, sind aus den Patentschriften EP 0 089 497 A 1, EP 0 256 540 A 1, EP 0 260 447 A 1, EP 0 297 576 A 1, WO 96/12747, EP 0 523 610 A 1, EP 0 228 003 A 1, EP 0 397 806 A 1, EP 0 574 417 A 1, EP 0 531 510 A 1, EP 0 581 211 A 1, EP 0 708 788 A 1, EP 0 593 454 A 1, DE-A-43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1, EP 0 536 712 A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401 565 A 1 oder EP 0 817 684, Spalte 5, Zeilen 31 bis 45, bekannt.

Diese Wasserbasislacke können auch als Funktionslacke zur Herstellung von Funktionsschichten und Funktionslackierungen verwendet werden.

Die resultierenden erfindungsgemäßen Klarlackierungen oder farb- und/oder effektgebenden Mehrschichtlackierungen können noch mit einer kratzfesten Beschichtung aus einem organisch modifizierten Keramikmaterial, wie es beispielsweise unter der Marke ORMOCER® im Handel ist, beschichtet werden.

Im allgmeinen werden die Beschichtungsstoffe in einer Naßschichtdicke appliziert, daß nach ihrer Aushärtung Beschichtungen mit der für ihre Funktionen notwendigen und vorteilhaften Schichtdicken resultieren. Im Falle der Elektrotauchlackierung liegen sie bei 5 bis 40, vorzugweise 10 bis 35, besonders bevorzugt 12 bis 30 und insbesondere 15 bis 25 µm, in Falle der Füllerlackierung, Steinschlagschutzgrundierung oder Funktionslackierungen liegen sie bei 10 bis 60, vorzugsweise 11 bis 55, besonders bevorzugt 12 bis 50 und insbesondere 13 bis 45 µm, im Falle der Basislackierung liegen sie bei 5 bis 50, vorzugsweise 5 bis 40, besonders bevorzugt 5 bis 30 und insbesondere 10 bis 25 µm, und im Falle der erfindungsgemäßen Klarlackierung liegen sie bei 10 bis 100, vorzugsweise 15 bis 80, besonders bevorzugt 20 bis 75 und insbesondere 25 bis 70 µm. Indes kann in der erfindungsgemäßen Mehrschichtlackierung die Funktionslackierung nur eine Schichtdicke von 20 bis 50% der Gesamtschichtdicke von Funktionslackierung und Basislackierung haben.

Zwar kommen die erfindungsgemäßen Pulverslurry-Klarlacke auch für die Anwendung außerhalb der Automobillackierung in Betracht, indes liegt ihr hauptsächlicher technischer Verwendungszweck auf dem besagten Gebiet, weil hier ihre besonderen Vorteile ganz besonders offen zu Tage treten. Bei den Substraten handelt es sich somit um Kraftfahrzeugkarosserien, insbesondere PKW-Karosserien, sowie Teilen hiervon, wie beispielsweise Türen, Motorhauben, Kotflügel, Kofferraumdeckel Spoiler, Schweller oder Windabweiser.

Diese bestehen insbesondere aus Stahl oder Aluminium. Die Metalloberflächen könnnen hierbei Grundierungen aufweisen. Im Falle von Aluminium kann es sich beispielsweise um eine durch anodische Oxidation erzeugte Oxidschicht handeln (Eloxal®-Verfahren). Im Falle von Stahl handelt es sich üblicherweise um eine kathodisch abgeschiedene und thermisch gehärtete Elektrotauchlackierung. Es kann aber auch eine kathodisch abgeschiedene Elektrotauchlackschicht verwendet werden, die nicht thermisch gehärtet, sondern lediglich getrocknet oder partiell gehärtet ist.

Die erfindungsgemäßen Pulverslurry-Klarlacke lassen sich mit den aus der Flüssiglacktechnologie bekannten Methoden aufbringen. Insbesondere können sie mittels Spritzverfahren aufgebracht werden. Vorzugsweise werden sie durch elektrostatische Lackierung der Karosserieaußenteile, gefolgt von pneumatischem Spritzen (Druckluftspritzen) der Karosserieinnenteile appliziert.

Dabei kann die elektrostatische Lackierung mittels eines elektrostatischen Sprühspalts, einer elektrostatischen Sprühglocke oder einer elektrostatischen Sprühscheibe erfolgen.

Des weiteren kann die elektrostatische Lackierung durch Elektrostatikunterstützte mechanische Zerstäubung erfolgen. Vorzugsweise wird diese mit Hilfe von elektrostatischen Hochrotationsscheiben oder Hochrotationsglocken durchgeführt.

Auch das pneumatische Spritzen oder Druckluftlackieren weist keine methodischen Besonderheiten auf, sondern kann per Hand oder mit Hilfe von üblichen und bekannten Lackierautomaten oder -robotern durchgeführt werden.

Ergänzend wird hierzu auf Römpp Lexikon Lacke und Druckfarben, Georg Thieme Verlag, Stuttgart, New York, 1998, Seite 186: »Elektrostatische Lackierung«, Seite 187: »Elektrostatische Sprühpistolen«, »Elektrostatisches Sprühen«, sowie Seite 165: »Druckluftspritzen«, verwiesen.

Bevorzugt wird die Applikation bei Beleuchtung mit sichtbarem Licht einer Wellenlänge von über 550 µm oder unter Lichtausschluß durchgeführt, wenn die erfindungsgemäßen Pulverslurry-Klarlacke (auch) mit aktinischer Strahlung härtbar sind. Hierdurch werden eine stoffliche Änderung oder Schädigung des erfindungsgemäß zu verwendenden Beschichtungsstoffs und des Overspray vermieden.

Selbstverständlich können diese Applikationsverfahren auch bei der Applikation zusätzlicher Lackschichten, sofern es sich nicht um Elektrotauchlacke handelt.

Die Härtung der applizierten Elektrotauchlackschichten, Füllerschichten oder Funktionssschichten, Basislackschichten und erfindungsgemäßen Klarlackschichten weist keine methodischen Besonderheiten auf, sondern erfogt mit Hilfe der üblichen und bekannten Verfahren und Vorrichtungen.

Bei der physikalischen Härtung müssen an und für sich keine besonderen Maßnahmen ergriffen werden; indes kann die physikalische Härtung durch durch Luftsauerstoff, Hitze oder durch Bestrahlen mit aktinischer Strahlung unterstützt werden.

Die thermische Härtung kann nach einer gewissen Ruhezeit oder Ablüftzeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Schichten und zum Verdunsten von flüchtigen Bestandteilen wie gegebenenfalls noch vorhandenem Lösemittel und/oder Wasser. Die Ablüftung kann durch eine erhöhte Temperatur, die zu einer Härtung noch nicht ausreicht, und/oder durch eine reduzierte Luftfeuchtigkeit beschleunigt werden.

Die thermische Härtung erfolgt beispielsweise durch Erhitzen in einem Umluftofen oder Bestrahlen mit IR- und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von 100 bis 180 °C.

Vorzugsweise wird bei der Härtung mit aktinischer Strahlung eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Pulverslurry-Schicht gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern, verbunden mit einer automatischen Bewegungseinrichtung für das Bestrahlen von Hohlräumen oder Kanten, (partiell) ausgehärtet werden.

Die Anlagen und Bedingungen dieser Härtungsmethoden werden beispielsweise in R. Holmes, U.V. and E.B. Curing Förmulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Bei Dual Cure können thermische Härtung und Härtung mit aktinischer Strahlung gleichzeitig oder nacheinander angewandt werden. Werden die beiden Härtungsmethoden nacheinander verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Vorzugsweise wird die erfindungsgemäße Pulverslurryschicht im geschmolzenem Zustand mit Hilfe der vorstehend beschriebenen Verfahren gehärtet.

Insgesamt bieten die erfindungsgemäßen Verfahren zur Herstellung der erfindungsgemäßen effektgebenden Mehrschichtlackierungen die ökologisch und wirtschaftlich ganz besonders vorteilhafte und bedeutsame Möglichkeit, Lackierungen auf rein wäßriger Basis ohne Emission flüchtiger organischer Stoffe zu verwirklichen.

Die in erfindungsgemäßer Verfahrensweise erhaltenen Klarlackierungen und farb- und/oder effektgebenden Mehrschichtlackierungen zeichnen sich durch eine sehr gute Haftung auf dem Substrat, eine sehr gute Zwischenschichthaftung, eine hervorragende Korrosionsschutzwirkung, eine sehr gute Schutzwirkung gegen Steinschlag und andere mechanische Schädigungen und einen sehr guten optischen Gesamteindruck, insbesondere was Farbtiefe, Metalliceffekt, dichroitischer Effekt und D.O.I. (Distinctiveness of the reftected image) betrifft, eine hohe Kratzfestigkeit, Chemikalienbeständigkeit und Witterungsbeständigkeit aus. Vor allem aber zeigen die erfindungsgemäßen Klarlackierungen keine Oberflächenstörungen wie Dellen, Krater oder Agglomerate mehr.

Die entsprechend beschichteten erfindungsgemäßen Karosserien vermitteln daher einen besonders hohen ästhetischen Gesamteindruck und haben eine besonders lange Gebrauchsdauer.

### Beispiel

### Die Herstellung einer erfindungsgemäßen effektgebenden Mehrschichtlackierung mit Hilfe einer erfindungsgemäßer Pulverslurry

Für das Beispiel wurde, wie in der deutschen Patentanmeldung DE 196 13 547 A 1 beschrieben, zunächst ein Pulverlack aus 77,4 Gewichtsteilen eines Methacrylatcopolymerisats aus Methylmethacrylat, Glydidylmethacrylat, n-Butylacrylat und Styrol, 19,4 Gewichtsteilen Dodecandisäure, 2 Gewichtsteilen eines handelsüblichen UV-Absorbers (Ciba® CGL 1545), 1 Gewichtsteil des handelsüblichen Lichtschutzmittels Tinuvin® 123 und 0,25 Gewichtsteilen des handelsüblichen Oxidationsschutzmittels Irgafos® PEPQ hergestellt.

Dieser Pulverlack wurde nach der in der deutschen Patentanmeldung DE 196 13 547 A 1, Spalte 6, angegebenen Versuchsvorschrift in Wasser dispergiert, so daß eine Pulverslurry resultierte.

Vor der Naßvermahlung der Pulverslurry auf einer üblichen und bekannten Rührwerksmühle wurde ihr die in der Tabelle angegebene Komplettierungszusammensetzung zugesetzt. Nach der Naßvermahlung resultierte der erfindungsgemäße Pulverslurry-Klarlack mit einer mittleren Teilchengröße von 3 bis 5 µm.

Der erfindungsgemäße Pulverslurry-Klarlack wurde vor der Applikation noch durch einen Beutelfilter der Maschenweite 50 µm filtriert.

Die Tabelle gibt einen Überblick über die Art und Menge der verwendeten Bestandteile.

**Tabelle: Die Herstellung der Pulverslurry**

| **Bestandteil** | **Gewichtsteile** |
|---|---|
| **Vordispergat:** | |
| VE-Wasser ^{a)} | 42 |
| Disperse Aid W22 ^{b)} | 1,03 |
| Triton X100 ^{c)} | 0,02 |
| Dimethylethanolamin | 0,08 |
| RM 8 ^{d)} | 0,9 |
| Pulverlack | 28 |

| **Komplettierungszusammensetzung:** | |
|---|---|
| VE-Wasser ^{a)} | 17,49 |
| RM 8 ^{d)} | 0,7 |
| Byk 333 ^{e)} | 0,05 |
| Triton X100 ^{c)} | 0,18 |
| **Pluriol® 600** ^{**f)**} | **0,155** |
| **Solvenon® IPP** ^{**g)**} | **0,31** |

| | |
|---|---|
| a) vollentsalztes Wasser; | |
| b) Dispergiermittel auf Polyurethanbasis der Firma Daniel Products; | |
| c) Entschäumer der Firma Union Carbide; | |
| d) Verdicker auf Polyurethanbasis der Firma Rohm & Haas; | |
| e) Verlaufmittel der Firma Byk Chemie; | |
| **f) Polypropylenglykol Pluriol® 600 der Firma BASF Aktiengesellschaft;** | |
| **g) Lösemittel von höher Lösekraft der Firma BASF Aktiengesellschaft.** | |

Für die Herstellung der erfindungsgemäßen Mehrschichtlackierung wurden in üblicher und bekannter Weise Prüftafeln der Abmessungen 10 cm x 20 cm hergestellt. Hierzu wurden Stahltafeln (Karosseriebleche), die mit einer üblichen und bekannten kathodisch abgeschiedenen und eingebrannten Elektrotauchlackierung (KTL) beschichtet waren, mit einem handelsüblichen Dünnschichtfüller (Ecoprime® der Firma BASF Coatings AG) beschichtet, wonach die resultierende Füllerschicht während fünf Minuten bei 20°C und einer relativen Luftfeuchtigkeit von 65% abgelüftet und in einem Umluftofen während fünf Minuten bei 80°C getrocknet wurde. Hiernach wiesen die Füllerschichten eine Trockenschichtdicke von 15 µm auf.

Nach dem Abkühlen der Prüftafeln auf 20 °C wurde ein handelsüblicher Wasserbasislack (Ecostar® der Firma BASF Coatings AG) appliziert, während fünf Minuten bei 20°C und einer relativen Luftfeuchtigkeit von 65% abgelüftet und in einem Umluftofen während fünf Minuten bei 80°C getrocknet, so daß die getrockneten Basislackschichten eine Trockenschichtdicke von etwa 15 µm aufwiesen.

Nach dem erneuten Abkühlen der Prüftafeln auf 20°C wurden die Basislackschichten mit der erfindungsgemäßen Pulverslurry überschichtet. Die resultierenden Pulverslurry-Klarlackschichten wurden während 3 Minuten bei 20°C und einer relativen Luftfeuchtigkeit von 65% abgelüftet und in einem Umluftofen während 5 Minuten bei 60°C getrocknet.

Nach der Applikation aller drei Schichten wurden sie gemeinsam während 30 Minuten bei 155°C eingebrannt, wodurch die erfindungsgemäße Mehrschichtlackierung resultierte. Ihre erfindungsgemäße Klarlackierung wies eine Schichtdicke von 40 µm auf. Sie war hoch glänzend und von einer hervorragenden Lösemittelbeständigkeit (mehr als 100 Doppelhübe im Methylethylketon-Test ohne Beschädigung) und einer guten Schwitzwasserbeständigkeit. Die Zwischenschichthaftung war sehr gut. Die erfindungsgemäße Klarlackierung war kratzfest, chemikalienbeständig und witterungsbeständig. Sie wies keine Oberflächenstörungen wie Kocher, Krater, Dellen oder Agglomerate auf.

## Patentansprüche

1. Pulverklarlackdispersionen (Pulverslurry-Klarlacke), herstellbar, indem man einen Pulverklarlack in einem wäßrigen Medium dispergiert und die resultierende Pulverslurry naß vermahlt, wobei der Pulverslurry vor ihrer Naßvermahlung mindestens ein Addukt von Ethylenoxid und/oder Propylenoxid an mindestens ein Glykol zugesetzt wird, **dadurch gekennzeichnet, daß** zusammen mit dem Addukt 0,1 bis 1,9 Gewichtsteile mindestens eines organischen Lösemittels von hoher Lösekraft auf 100 Gewichtsteile Festkörper des Pulverslurry-Klarlacks verwendet werden.

2. Pulverslurry-Klarlacke nach Anspruch 1, **dadurch gekennzeichnet, daß** als Glykol Ethylenglykol, 1,3- und/oder 1,2-Propylenglykol oder 1,2-, 1,3- und/oder 1,4-Butylenglykol verwendet wird.

3. Pulverslurry-Klarlacke nach Anspruch 2, **dadurch gekennzeichnet, daß** 1,2- und/oder 1,3-Propylenglykol verwendet wird.

4. Pulverslurry-Klarlacke nach Anspruch 3, **dadurch gekennzeichnet, daß** das Addukt von Propylenoxid an 1,2- und/oder 1,3-Propylenglykol (Polypropylenglykol) verwendet wird.

5. Pulverslurry-Klarlacke nach Anspruch 4, **dadurch gekennzeichnet, daß** das zahlenmittlere Molekulargewicht des Polypropopylenglykols bei 350 bis 1.000 Dalton liegt.

6. Pulverslurry-Klarlacke nach einem der Ansprüche 1 bis 5, **dadurch gekennzeichnet, daß** die Addukte in einer Menge von 0,01 bis 2,0 Gew.-%, bezogen auf den Festkörper des jeweiligen Puverslurry-Klarlacks, verwendet wird.

7. Pulverslurry-Klarlacke nach einem der Ansprüche 1 bis 6, **dadurch gekennzeichnet, daß** sie physikalisch oder thermisch und/oder mit aktinischer Strahlung härtbar sind.

8. Pulverslurry-Klarlacke nach einem der Ansprüche 1 bis 7, **dadurch gekennzeichnet, daß** sie strukturviskos sind.

9. Verwendung der Pulverslurry-Klarlacke nach einem der Ansprüche 1 bis 8 zur Herstellung von Klarlackierungen.

10. Verwendung der Pulverslurry-Klarlacke nach einem der Ansprüche 1 bis 8 zur Herstellung von Klarlackierungen im Rahmen von farb- und/oder effektgebenden Mehrschichtlackierungen.

11. Farb- und/oder effektgebende Mehrschichtlackierung herstellbar, indem man auf ein Substrat
(1) einen Füller oder Funktionslack auf eine kathodisch abgeschiedene und thermisch gehärtete Elektrotauchlackierung oder naß-in-naß auf eine kathodisch abgeschiedene, nicht oder nur partiell gehärtete Elektrotauchlackschicht appliziert, wonach man
(2) die resultiernde Füllerschicht oder Funktionsschicht für sich alleine thermisch oder thermisch und mit aktinischer Strahlung oder zusammen mit der Elektrotauchlackschicht thermisch oder thermisch und mit aktinischer Strahlung härtet, wodurch die Füllerlackierung, Steinschlagschutzgrundierung oder Funktionslackierung resultiert,
(3) einen Basislack, insbesondere einen Wasserbasislack, auf die Füllerlackierung, Steinschlagschutzgrundierung oder Funktionslackierung appliziert, wodurch eine Basislackschicht resultiert,
(4) die Basislackschicht, ohne sie vollständig zu vernetzen, ablüftet oder trocknet, oder - alternativ - sie physikalisch oder thermisch und/oder mit aktinischer Strahlung härtet, wodurch die Basislackierung resultiert,
(5) mindestens einen Pulverslurry-Klarlack auf die Basislackschicht oder - alternativ - auf die Basislackierung appliziert, wonach man
(6) die Basislackschicht und die Pulverslurry-Klarlackschicht(en) gemeinsam thermisch oder thermisch und mit aktinischer Strahlung härtet, oder - alternativ - die Pulverslurry-Klarlackschicht(en) für sich alleine thermisch und/oder mit aktinischer Strahlung härtet wodurch die Basislackierung und die Klarlackierung(en) resultieren,
**dadurch gekennzeichnet, daß** man als Pulverslurry-Klarlack einen Pulverslurry-Klarlack gemäß einem der Ansprüche 1 bis 8 verwendet.

12. Farb- und/oder effektgebende Mehrschichtlackierung herstellbar, indem man auf ein Substrat
(1) einen Füller oder Funktionslack auf eine kathodisch abgeschiedene und thermisch gehärtete Elektrotauchlackierung appliziert, wonach man
(2) die resultiernde Füllerschicht oder Funktionsschicht ohne sie vollständig zu vernetzen, ablüftet oder trocknet,
(3) einen Basislack, insbesondere einen Wasserbasislack, auf die Füllerschicht oder Funktionsschicht appliziert, wodurch eine Basislackschicht resultiert,
(4) die Basislackschicht, ohne sie vollständig zu vernetzen, ablüftet oder trocknet,
(5) mindestens einen Pulverslurry-Klarlack auf die Basislackschicht appliziert, wonach man
(6) die Füllerschicht oder Funktionsschicht, die Basislackschicht und die Pulverslurry-Klarlackschicht(en) gemeinsam thermisch und/oder mit aktinischer Strahlung härtet, wodurch die Füllerlackierung, Steinschlagschutzgrundierung oder Funktionslackierung, die Basislackierung und die Klarlackierung(en) resultieren,
**dadurch gekennzeichnet, daß** man als Pulverslurry-Klarlack einen Pulverslurry-Klarlack gemäß einem der Ansprüche 1 bis 8 verwendet.

## Claims

1. Powder clearcoat dispersions (powder slurry clearcoats) preparable by dispersing a powder clearcoat in an aqueous medium and wet milling the resulting powder slurry, at least one adduct of ethylene oxide and/or propylene oxide with at least one glycol being added to the powder slurry prior to wet milling, **characterized in that** together with the adduct from 0.1 to 1.9 parts by weight of at least one organic solvent of high solvency are used per 100 parts by weight of solids of the powder slurry clearcoat.

2. Powder slurry clearcoats according to Claim 1, **characterized in that** as said glycol ethylene glycol, 1,3- and/or 1,2-propylene glycol or 1,2-, 1,3- and/or 1,4-butylene glycol are used.

3. Powder slurry clearcoats according to Claim 2, **characterized in that** 1,2- and/or 1,3-propylene glycol is used.

4. Powder slurry clearcoats according to Claim 3, **characterized in that** the adduct of propylene oxide with 1,2- and/or 1,3-propylene glycol (polypropylene glycol) is used.

5. Powder slurry clearcoats according to Claim 4, **characterized in that** the number-average molecular weight of the polypropylene glycol is from 350 to 1000 daltons.

6. Powder slurry clearcoats according to any of Claims 1 to 5, **characterized in that** the adducts are used in an amount of from 0.01 to 2.0% by weight, based on the solids content of the respective powder slurry clearcoat.

7. Powder slurry clearcoats according to any of Claims 1 to 6, **characterized in that** they are curable physically or thermally and/or with actinic radiation.

8. Powder slurry clearcoats according to any of Claims 1 to 7, **characterized in that** they are pseudoplastic.

9. Use of the powder slurry clearcoats according to any of Claims 1 to 8 to produce clearcoat finishes.

10. Use of the powder slurry clearcoats according to any of Claims 1 to 8 to produce clearcoat finishes as part of multicoat colour and/or effect finishes.

11. Multicoat colour and/or effect finish preparable on a substrate by
(1) applying a surfacer or functional coating material to a cathodically deposited and thermally cured electrodeposition coating, or wet-on-wet to a cathodically deposited, uncured or only part-cured electrodeposition coating film, and then
(2) subjecting the resultant surfacer film or functional film, on its own, to curing thermally, or thermally and with actinic radiation, or, together with the electrodeposition coating film, to curing thermally, or thermally and with actinic radiation, to give the surfacer coat, antistonechip primer, or functional coat,
(3) applying a basecoat, especially an aqueous basecoat, to the surfacer coat, antistonechip primer or functional coat, to give a basecoat film,
(4) flashing off or drying the basecoat film without completely crosslinking it, or - alternatively - curing it physically, or thermally and/or with actinic radiation, to give the basecoat,
(5) applying at least one powder slurry clearcoat of the invention to the basecoat film or - alternatively - to the basecoat, and then
(6) curing the basecoat film and the resulting powder slurry clearcoat film(s) together, thermally, or thermally and with actinic radiation, or - alternatively - curing the powder slurry clearcoat film(s), on its (their) own, thermally and/or with actinic radiation, to give the basecoat and the clearcoat(s),
**characterized in that** said powder slurry clearcoat is a powder slurry clearcoat according to any of Claims 1 to 8.

12. Multicoat colour and/or effect finish preparable on a substrate by
(1) applying a surfacer or functional coating material to a cathodically deposited and thermally cured electrodeposition coating, and then
(2) flashing off or drying the resulting surfacer film or functional film, without completely crosslinking it,
(3) applying a basecoat material, especially an aqueous basecoat material, to the surfacer film or functional film, to give a basecoat film,
(4) flashing off or drying the basecoat film, without completely crosslinking it,
(5) applying at least one powder slurry clearcoat to the basecoat film, and then
(6) curing the surfacer film or functional film, the basecoat film and the powder slurry clearcoat film(s) together, thermally, and/or with actinic radiation, to give the surfacer coat, antistonechip primer or functional coat, the basecoat, and the clearcoat(s),
**characterized in that** said powder slurry clearcoat is a powder slurry clearcoat according to any of Claims 1 to 8.

## Revendications

1. Dispersions de vernis clair en poudre (vernis clair à suspension de poudre) préparables en dispersant un vernis clair en poudre dans un milieu aqueux et en broyant au mouillé la suspension de poudre résultante, au moins un produit d'addition d'oxyde d'éthylène et/ou d'oxyde de propylène et d'au moins un glycol étant ajouté à la suspension de poudre avant son broyage au mouillé, **caractérisées en ce que**, conjointement au produit d'addition, on utilise 0,1 à 1,9 partie en poids d'au moins un solvant organique ayant un pouvoir solvant élevé pour 100 parties en poids de matière solide du vernis clair à suspension de poudre.

2. Vernis clairs à suspension de poudre suivant la revendication 1, **caractérisés en ce que**, comme glycol, on utilise de l'éthylèneglycol, du 1,3-propylèneglycol et/ou du 1,2-propylèneglycol ou du 1,2-butylèneglycol, du 1,3-butylèneglycol et/ou du 1,4-butylèneglycol.

3. Vernis clairs à suspension de poudre suivant la revendication 2, **caractérisés en ce qu'**on utilise du 1,2-propylèneglycol et/ou du 1,3-propylèneglycol.

4. Vernis clairs à suspension de poudre suivant la revendication 3, **caractérisés en ce qu'**on utilise le produit d'addition d'oxyde de propylène et de 1,2-propylèneglycol et/ou de 1,3-propylèneglycol (polypropylèneglycol).

5. Vernis clairs à suspension de poudre suivant la revendication 4, **caractérisés en ce que** le poids moléculaire moyen numérique du polypropylèneglycol est de 350 à 1000 Daltons.

6. Vernis clairs à suspension de poudre suivant l'une des revendications 1 à 5, **caractérisés en ce qu'**on utilise les produits d'addition en une quantité de 0,01 à 2,0 % en poids, par rapport à la matière solide du vernis clair à suspension de poudre respectif.

7. Vernis clairs à suspension de poudre suivant l'une des revendications 1 à 6, **caractérisés en ce qu'**ils sont durcissables par voie physique ou thermique et/ou à l'aide d'un rayonnement actinique.

8. Vernis clairs à suspension de poudre suivant l'une des revendications 1 à 7, **caractérisés en ce qu'**ils sont de structure visqueuse.

9. Utilisation des vernis clairs à suspension de poudre suivant l'une des revendications 1 à 8, pour la fabrication de vernissages clairs.

10. Utilisation des vernis clairs à suspension de poudre suivant l'une des revendications 1 à 8, pour la fabrication de vernissages clairs dans le cadre de vernissages multicouches donnant de la couleur et/ou un effet.

11. Vernissages multicouches donnant de la couleur et/ou un effet, préparables
(1) en appliquant sur un substrat une charge ou un vernis fonctionnel sur un vernissage par trempage électrophorétique déposé par voie cathodique et thermiquement durci ou de manière humide-sur-humide sur une couche de vernis de trempage électrophorétique déposée par voie cathodique et non durcie ou uniquement partiellement, après quoi
(2) on durcit la couche de charge ou couche fonctionnelle résultante indépendamment par voie thermique ou par voie thermique et avec un rayonnement actinique ou conjointement avec la couche de vernis de trempage électrophorétique par voie thermique ou par voie thermique et avec un rayonnement actinique, ce qui permet d'obtenir un vernissage à charge, une couche de fond de protection contre les gravillons ou un vernissage fonctionnel,
(3) on applique un vernis de base, en particulier un vernis de base à l'eau, sur le vernissage à charge, la couche de fond de protection contre les gravillons ou le vernissage fonctionnel, ce qui permet d'obtenir une couche de vernis de base,
(4) on désaère ou sèche la couche de vernis de base, sans la réticuler totalement, ou, d'une manière alternative, on la durcit par voie physique ou thermique et/ou avec un rayonnement actinique, ce qui permet d'obtenir le vernissage de base,
(5) on applique au moins un vernis clair à suspension de poudre sur la couche de vernis de base ou, d'une manière alternative, sur le vernissage de base, après quoi
(6) on durcit la couche de vernis de base et la ou les couches de vernis clairs à suspension de poudre conjointement par voie thermique ou par voie thermique et à l'aide d'un rayonnement actinique, ou, d'une manière alternative, on durcit la ou les couches de vernis clair à suspension de poudre indépendamment par voie thermique et/ou avec un rayonnement actinique, ce qui permet d'obtenir le vernissage de base et le ou les vernissages clairs,
**caractérisés en ce qu'**on utilise, comme vernis clair à suspension de poudre, un vernis clair à suspension de poudre suivant l'une des revendications 1 à 8.

12. Vernissages multicouches donnant de la couleur et/ou un effet, préparables
(1) en appliquant sur un substrat une charge ou un vernis fonctionnel sur un vernissage par trempage électrophorétique déposé par voie cathodique et durci par voie thermique, après quoi
(2) on désaère ou sèche la couche de charge ou couche fonctionnelle résultante sans la réticuler totalement,
(3) on applique sur la couche de charge ou couche fonctionnelle un vernis de base, en particulier un vernis de base à l'eau, ce qui permet d'obtenir une couche de vernis de base,
(4) on désaère ou sèche la couche de vernis de base, sans la réticuler totalement,
(5) on applique sur la couche de vernis de base au moins un vernis clair à suspension de poudre, après quoi
(6) on durcit la couche de charge ou couche fonctionnelle, la couche de vernis de base et la ou les couches de vernis clair à suspension de poudre conjointement par voie thermique et/ou avec un rayonnement actinique, ce qui permet d'obtenir un vernissage à charge, une couche de fond de protection contre les gravillons ou un vernissage fonctionnel, le vernissage de base et le ou les vernissages clairs,
**caractérisés en ce que**, comme vernis clair à suspension de poudre, on utilise un vernis clair à suspension de poudre suivant l'une des revendications 1 à 8.
